# EUROPEAN PATENT APPLICATION

(11) **EP 4 257 383 A1**
(43) Date of publication of application: **11.10.2023**
(21) Application number: 23166471.5
(22) Date of filing: 04.04.2023
(51) Int. Cl.: B60H 1/00, B60H 1/32

(54) **INTEGRATED THERMAL MANAGEMENT SYSTEM**

(30) Priority: 06.04.2022 US 202217714833
(71) Applicant: Polestar Performance AB, 405 31 Gothenburg (SE)
(72) Inventor: WHITE, Kevin, Llanelli, SA15 4LH (GB)
(74) Representative: Zacco Sweden AB

(57) **Abstract**

An integrated vehicle thermal management system 100, comprising a manifold assembly (102), including , a compressor (110), and an accumulator (116) and further including one, two or more rotary valves (V1,V2;V3;V5,V6) configured to selectively fluidly couple at least one of a first pump (112A) or a second pump (112B) to at least one of a high-voltage coolant heater (104), a chiller (106), a water-cooled condenser (108) to affect different system configurations of transferring heat between a cabin area (62), engine propulsion system (54) , battery pack (52) and an ambient environment (128).

## Description

### TECHNICAL FIELD

The present disclosure relates generally to thermal control systems, and more particularly to a vehicle thermal management architecture that enables thermal and performance optimization depending upon ambient conditions and component operating characteristics.

### BACKGROUND

Electric vehicles are becoming increasingly popular as consumers look to decrease their environmental impact and improve air quality. Instead of a traditional internal combustion engine, electric vehicles include one or more electric motors or drive units, powered by a rechargeable battery pack. As is well known, these electric motors generate heat during use, which must be discharged through an active cooling system, often through circulation of a heat conducting fluid medium through one or more fluid conduits adjacent to the electric motors to absorb at least some of the heat generated by the electric motors, then through a radiator or other type of heat exchanger to transfer the heat to air passing over the radiator through conduction.

Typically electric vehicles additionally include a number of auxiliary systems that also generate heat (e.g., HVAC systems, braking systems, batteries, etc.). Such auxiliary systems dissipate heat through a variety of methods. For example, with air-conditioning units the system may include a heat exchanger or radiator to dissipate the heat generated by the auxiliary system into air passing over the heat exchanger.

Because auxiliary systems have different cooling requirements and operate over a different range of temperatures than electric motor heat exchangers, most vehicles are provided with multiple independent heat transfer circuits. For example, a vehicle may include a first heat transfer circuit for the traction motor, a second heat transfer circuit for the battery, and a third heat transfer circuit for the HVAC system, with each circuit having its own componentry. Such an approach is inherently inefficient as each thermal management system requires its own components (e.g., plumbing, pumps, valves, refrigerant systems, etc.), which adds weight and cost to the vehicle. The present disclosure addresses this concern.

### SUMMARY

Embodiments of the present disclosure provide an integrated thermal management system in which a number of system components that are typically positioned in different parts of the vehicle are grouped into a single assembly, such that many of the components are multi-purposed to be used across what were traditionally separate, independent systems. One advantage of the present disclosure includes a reduced part count, wherein multiple fluid conduits, pipes or hoses can be integrated into a single plastic molded or metal cast manifold. Another advantage of the present disclosure includes shortened fluid conduit routings, which can lead to significant reductions in fluid volumes and faster system response times due to reduced fluid transit times. Because at least a portion of the integrated thermal management system represents a discrete assembly, embodiments of the present disclosure reduced build costs, as the discrete assembly can be installed in a single operation, as opposed to multiple components being fitted across multiple workstations with conventional thermal management systems. Yet another advantage of the present disclosure includes a reduction in servicing and repair, wherein removal of the single assembly presents a significant time savings over replacing individual components, particularly in tight and hard to reach spaces.

Some embodiments of the present disclosure provides an integrated thermal management system comprising three rotary coolant valves incorporating different shaped "cams" configured to direct a flow of thermal regulation fluid between multiple inlet and outlet ports in different combinations, thereby enabling operation of the integrated thermal management system in over thirty different configurations for moving heat from one area of the vehicle to another. In alternative embodiments, the integrated thermal management system can include a greater or lesser number of valves. For example, in one embodiment, the integrated thermal management system can include two binary solenoid valves configured to provide the advantage of component integration.

Some embodiments of the present disclosure provides integrated vehicle thermal management system, including a manifold assembly integrating a plurality of valves in fluid communication with conduit coupling at least one of a first pump, a second pump, a high-voltage coolant heater, a chiller, a water-cooled condenser, a compressor, and an accumulator into a discrete, preassembled unit positionable within a vehicle during assembly, wherein the manifold assembly is fluidly coupleable to conduit in fluid communication with at least one of a radiator, cabin HVAC components, engine propulsion system heat exchanger, or battery pack heat exchanger positioned external to the manifold assembly.

In some embodiments herein, the system further includes at least one rotary valve configured to selectively fluidly couple at least one of the first pump or a second pump to at least one of the high-voltage coolant heater, the chiller, the water-cooled condenser, the compressor, or the accumulator. In one embodiment, the at least one rotary valve comprises a shaped cam rotatable within a housing defining a plurality of inlet ports and a plurality of outlet ports, wherein the shaped cam is configured to fluidly couple at least one inlet port to at least one outlet port. In one embodiment, the housing of the at least one rotary valve defines at least three inlet ports and at least two outlet ports. In one embodiment, the at least one rotary valve is rotatable between a first position fluidly coupling a first inlet port to a first outlet port, and a second position fluidly coupling a second inlet port to a second outlet port.

According to some embodiments herein, the manifold assembly includes three rotary valves configured to affect over thirty different system configurations of transferring heat between a cabin area, an engine propulsion system, a battery pack and an ambient environment. In one embodiment, the three rotary valves comprise a first rotary valve configurable in three positions, a second rotary valve configurable and four positions, and a third rotary valve configurable in two positions. Any aspect of the system herein may further comprise an electronic control unit configured to control a position of the three rotary valves. In one embodiment, the system further includes three binary valves.

Another embodiment of the present disclosure provides an integrated vehicle thermal management system, including a manifold unit positionable within a vehicle during assembly, the manifold unit including at least one rotary valve configured to selectively fluidly couple at least one of a first pump or a second pump to at least one of a high-voltage coolant heater, a chiller, a water-cooled condenser, a compressor, or an accumulator positioned within the manifold unit.

According to some embodiments herein, the at least one rotary valve comprises a shaped cam rotatable within a housing defining a plurality of inlet ports and a plurality of outlet ports, wherein the shaped cam is configured to fluidly couple at least one inlet port to at least one outlet port. In one embodiment, the at least one rotary valve is rotatable between a first position fluidly coupling a first inlet port to a first outlet port, and a second position fluidly coupling a second inlet port to a second outlet port. In one embodiment, the manifold assembly includes three rotary valves configured to affect over thirty different system configurations of transferring heat between a cabin area, an engine propulsion system, a battery pack and an ambient environment. In one embodiment, the system further includes an electronic control unit configured to control a position of the three rotary valves.

Another embodiment of the present disclosure provides an integrated vehicle thermal management system including three rotary valves configured to selectively fluidly couple at least one of a first pump or a second pump to at least one of a high-voltage coolant heater, a chiller, a water-cooled condenser, a compressor, and an accumulator to affect over thirty different system configurations of transferring heat between a cabin area, engine propulsion system, battery pack and an ambient environment.

According to some embodiments herein, each of the three one rotary valves comprises a shaped cam is rotatable within a housing defining a plurality of inlet ports and a plurality of outlet ports, wherein the shaped cam is configured fluidly couple at least one inlet port to at least one outlet port. According to some embodiments , at least one rotary valve of the three rotary valve is rotatable between a first position fluidly coupling a first inlet port to a first outlet port, and a second position fluidly coupling a second inlet port to a second outlet port. According to some embodiments, the three rotary valves, the first pump, the second pump and at least one of the high-voltage coolant heater, the chiller, the water-cooled condenser, the compressor, or the accumulator are integrated into a preassembled manifold unit. According to some embodiments, the system further includes an electronic control unit configured to control a position of the three rotary valves. According to some embodiments, the system further includes three binary valves.

The summary above is not intended to describe each illustrated embodiment or every implementation of the present disclosure. The figures and the detailed description that follow more particularly exemplify these embodiments.

### BRIEF DESCRIPTION OF THE DRAWINGS

The disclosure can be more completely understood in consideration of the following detailed description of various embodiments of the disclosure, in connection with the accompanying drawings, in which:
FIG. 1 is a perspective view depicting an electric vehicle including an integrated thermal management system, in accordance with some embodiments of the disclosure.
FIG. 2 is a system architecture diagram depicting an integrated thermal management system, in accordance with some embodiments of the disclosure.
FIG. 3A is a schematic view depicting a first rotary valve, in accordance with some embodiments of the disclosure.
FIG. 3B is a schematic view depicting a second rotary valve, in accordance with some embodiments of the disclosure.
FIG. 3C is a schematic view depicting a third rotary valve, in accordance with some embodiments of the disclosure.
FIGS. 4A-C are schematic views respectively depicting a first rotary valve in a first, second and third position, in accordance with some embodiments of the disclosure.
FIGS. 5A-D are schematic views respectively depicting a second rotary valve in a first, second, third, and fourth position, in accordance with some embodiments of the disclosure.
FIGS. 6A-B are schematic views respectively depicting a third rotary valve in a first and second position, in accordance with some embodiments of the disclosure.
FIG. 7 is a table representing switch positions and component operations in thirty-one different system configurations, in accordance with some embodiments of the disclosure.
FIG. 8 is a system architecture diagram depicting an integrated thermal management system including an electronic control unit, in accordance with some embodiments of the disclosure.
FIG. 9 is a system architecture diagram depicting an alternative integrated thermal management system, in accordance with some embodiments of the disclosure.

While embodiments of the disclosure are amenable to various modifications and alternative forms, specifics thereof shown by way of example in the drawings will be described in detail. It should be understood, however, that the intention is not to limit the disclosure to the particular embodiments described. On the contrary, the intention is to cover all modifications, equivalents, and alternatives falling within the spirit and scope of the subject matter as defined by the claims.

### DETAILED DESCRIPTION

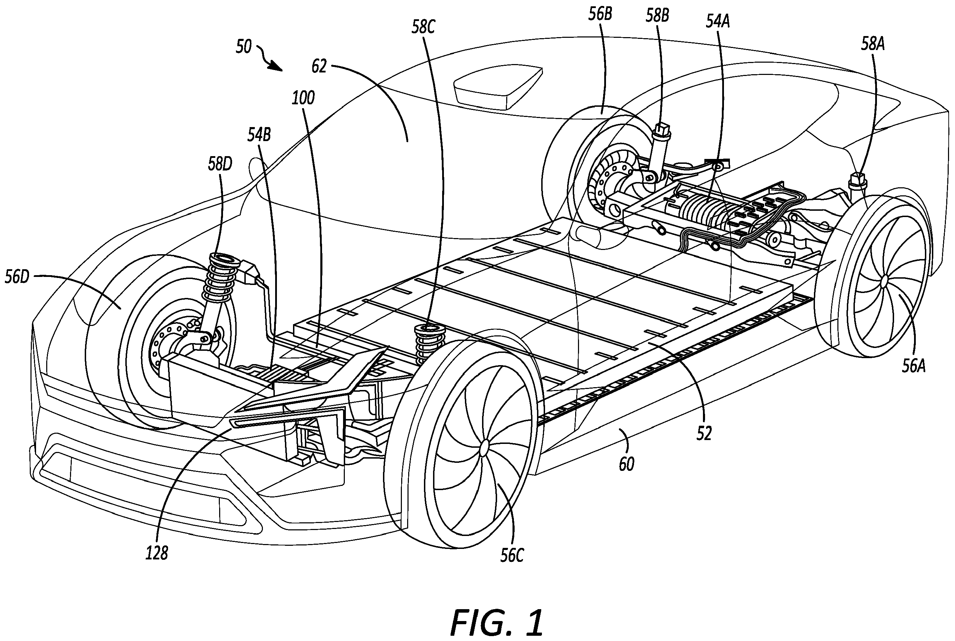

Referring to FIG. 1, a vehicle 50 having an integrated thermal management system 100 is depicted in accordance with some embodiments of the disclosure. Consolidating and integrating thermal management system components that are typically scattered across a vehicle into the integrated thermal management system 100, among many other advantages, provides a significant reduction in overall bulk and weight over conventional thermal management systems. Moreover, because numerous components are integrated into the thermal management system 100, the overall number of clips, fasteners, fixings and mounts necessary to secure the integrated thermal management system 100 to the frame of the vehicle 50 is reduced, thereby in turn reducing the amount of labor necessary to construct the electric vehicle.

In some embodiments, the vehicle 50 can be an electric vehicle, wherein the term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system. For example, in some embodiments the vehicle 50 can include a battery pack 52 electrically coupled to one or more electric motors or drive units 54A-B (collectively referred to herein as an "engine propulsion system"). The term "battery pack" as used herein refers to multiple individual batteries contained within a single piece or multi-piece housing, the individual batteries electrically interconnected to achieve the desired voltage and capacity for a particular application. The terms "battery" and "battery system" may be used interchangeably and as used herein refer to an electrical energy storage system that has the capability to be charged and discharged such as a battery, battery pack, capacitor or super-capacitor. The terms "battery," "cell," and "battery cell" may be used interchangeably and may refer to any of a variety of different cell types, chemistries and configurations including, but not limited to, lithium ion (e.g., lithium iron phosphate, lithium cobalt oxide, other lithium metal oxides, etc.), lithium ion polymer, nickel metal hydride, nickel cadmium, nickel hydrogen, nickel zinc, silver zinc, or other battery type/configurations.

The one or more drive units 54A-B can be coupled to a plurality of ground engaging wheels 56A-D, wherein a plurality of spring and damper suspension systems 58A-D can operably couple the ground engaging wheels 56A-D to a body 60 of the vehicle 50. During operation, the battery pack 52 and one or more drive units 54A-B can generate heat, which if not dissipated can cause the battery pack 52 and one or more drive units 54A-B to overheat, potentially resulting in a decrease in performance or damage to the vehicle 50. In addition to serving as an anchor point for the drive units 54A-B and engaging wheels 56A-D, the body 60 of the vehicle 50 can define a passenger or cabin area 62, which can be selectively heated or cooled for the comfort of the passengers therein. Thermal regulation of the battery pack 52, one or more drive units 54A-B, cabin area 62, and other components can be provided by the integrated thermal management system 100.

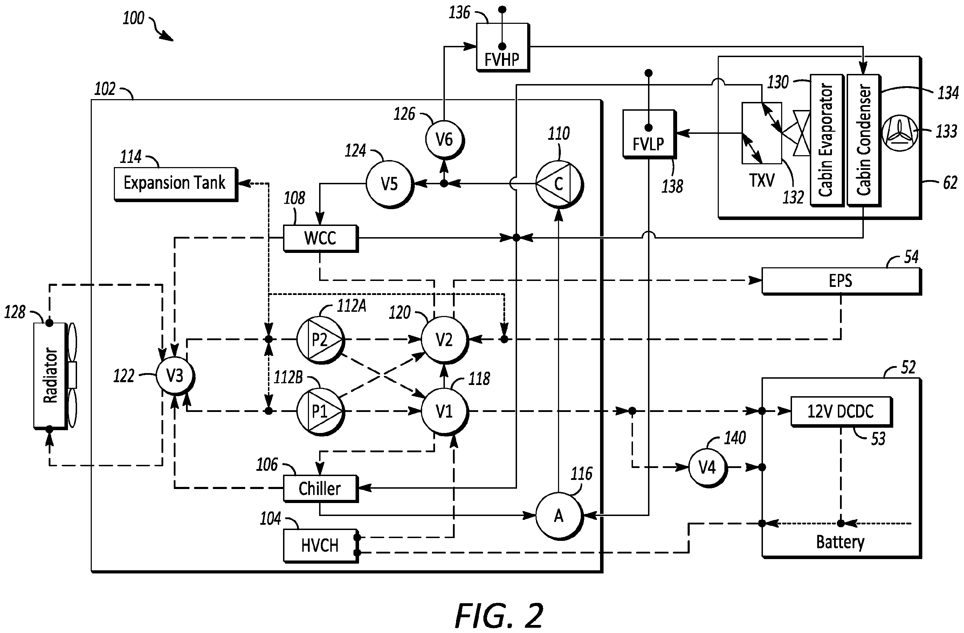

Referring to FIG. 2, an architectural diagram of an integrated thermal management system 100 is depicted in accordance with some embodiments of the disclosure. In some embodiments, the integrated thermal management system 100 can include a manifold 102 into which multiple fluid conduits, pipes, hoses and other system components can be positioned. In embodiments, the manifold 102 can be in the form of a discrete plastic molded or metal cast assembly, such that the multiple fluid conduits and other system components are packaged in a single, unitary assembly, thereby enabling ease in installation, removal and replacement of the manifold 102.

In embodiments, a thermal regulation fluid can be configured to flow through the multiple fluid conduits, pipes and hoses and other system components of the manifold 102 and integrated thermal management system 100, generally. The thermal regulation fluid (occasionally referred to herein as "refrigerant" or "coolant") can be any type of fluid configured to produce cooling effect while undergoing a phase change (e.g., vaporizing from a liquid to a gas). An ideal refrigerant is noncorrosive, non-toxic, non-flammable, with no ozone depletion and global warming potential. The refrigerant is preferably natural with a well-studied and low environmental impact. The refrigerant preferably has a boiling point that is somewhat below the target temperature (although the boiling point can be adjusted by system pressure), a high heated vaporization, a moderate density in liquid form, a relatively high density in gaseous form (which can be adjusted by system pressure) and a high critical temperature.

In some embodiments, the manifold 102 can optionally include a high-voltage coolant heater (HCVH) 104, a chiller 106, a water-cooled condenser (WCC) 108, a compressor (C) 110, one or more pumps 112A/B, an expansion tank 114, an accumulator (A) 116, and a plurality of valves (V1) 118, (V2) 120, (V3) 122, (V5) 124, and (V6) 126. The high-voltage cooling heater 104 can be configured to convert electrical energy into heat through one or more resistant heating elements, thereby generally raising a temperature of the coolant passing therethrough. For example, in some embodiments the high-voltage cooling heater 104 can include one or more high thermal power density heating elements with short response times suitable for applications with voltages between about 100 V and about 800 V, with a power range of between about 3 kW and about 10 kW, suitable for a wide range of applications.

By contrast, the chiller 106 can be configured to remove heat from the coolant via a vapor compression or absorption refrigeration cycle. Similarly, the water-cooled condenser 108 can be a heat exchanger configured to generally lower a temperature of the coolant. Heat removed from the coolant can be exhausted by either the chiller 106 or water-cooled condenser 108 to the surrounding environment.

The compressor 110 can be configured to generally increase a pressure of the coolant, occasionally by reducing a volume of the coolant. The one or more pumps 112A/B can be configured to generally provide a motive force to circulate coolant through the multiple fluid conduits and other system components.

The expansion tank 114 can be configured to store excess coolant within the closed integrated thermal management system 100. In some embodiments, the expansion tank 100 can be at least partially filled with a generally compressible, nonreactive gas configured to cushion shock caused by a fluid hammer and absorb excess fluid pressure caused by thermal expansion. The accumulator 116 can be a pressure vessel configured to store the coolant within a desired range of pressures or potential energies.

The plurality of valves can include a combination of one or more rotary valves 118, 120, 122 incorporating shaped cams or conduits configured to direct the flow of coolant between multiple inlet and outlet ports in different combinations, as well as one or more binary valves 124, 126 configured to selectively shut off a flow of the coolant along a desired conduit. In embodiments, the combination of valves 118, 120, 122, 124, 126 can direct a flow of coolant through the integrated thermal management system 100 to provide the desired heating and/or cooling effect.

Beyond the manifold 102, the integrated thermal management system 100 can provide temperature regulation to the cabin 62, engine propulsion system 54, and battery pack 52. In some embodiments, the integrated thermal management system 100 can include a radiator 128 positioned at a front of the vehicle (as additionally depicted in FIG. 1). The radiator 128 can be configured to transfer heat from the coolant to the surrounding environment, for example via the use of an increased surface area (e.g., cooling fins) with a circulation of air their over, thereby transferring heat from the coolant to the air passing over or through the radiator.

The cabin thermal management components can include a cabin evaporator 130, comprising a thermal expansion valve 132, and a cabin condenser 134. In some embodiments, one or more fill valves 136, 138 can be accessed to regulate a quantity of coolant within the integrated thermal management system 100. For example, in some embodiments, the system 100 can include a high-pressure fill valve 136 and a low-pressure fill valve 138 positioned along the conduit operably coupling the manifold 102 to the cabin thermal management components. In some embodiments, one or more valves can be included on the conduit operably coupling the manifold 102 to either of the engine propulsion system 54 and battery 52. For example, as depicted, in one embodiment, a binary valve (V4) 140 can be positioned on the conduit between the manifold 102 and the battery 52. Other system configurations are also contemplated.

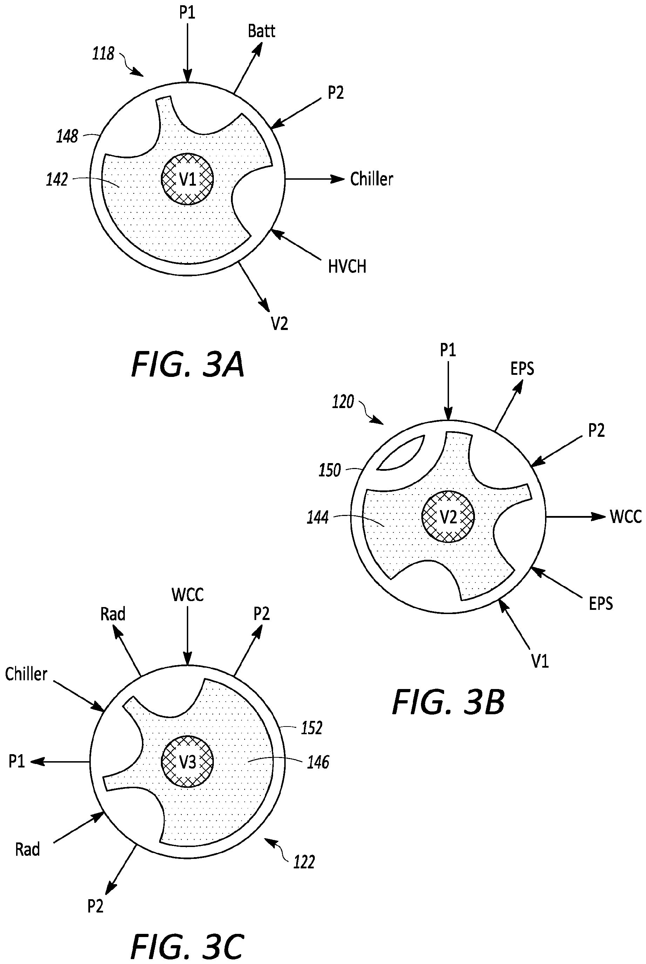

With additional reference to FIGS. 3A-C, schematic views of the first, second and third rotary valves 118, 120, 122 are depicted in accordance with embodiments of the disclosure. In embodiments, each of the valves 118, 120, 122 can include a cam 142, 144, 146 rotatably housed within a housing 148, 150, 152, wherein the housing defines a plurality of inlets and outlets for fluid coupling to other components within the manifold 102. In some embodiments, each of the cams 142, 144, 146 can include a surface defining one or more cutouts or channels configured to fluidly couple one or more conduit lines within the manifold 102, depending upon a position of the cam 142, 144, 146 relative to the housing 148, 150, 152, wherein rotation of the cam 142, 144, 146 relative to the housing 148, 150, 152 operably couples and/or isolates different conduit lines within the manifold 102.

For example, in some embodiments, the first rotary valve 118 can selectively couple fluid conduits leading to a first pump 112A, the battery pack 52, a second pump 112B, the chiller 106, the high-voltage coolant heater 104, and the second rotary valve 120. In some embodiments, a flow of coolant within the integrated thermal management system 100 can flow into the first rotary valve 118 via the first and second pumps 112A/B and high-voltage coolant heater 104 via inlets defined by the housing 148, and outwardly to the battery pack 52, chiller 106 and second rotary valve 120 via outlets defined by the housing 148.

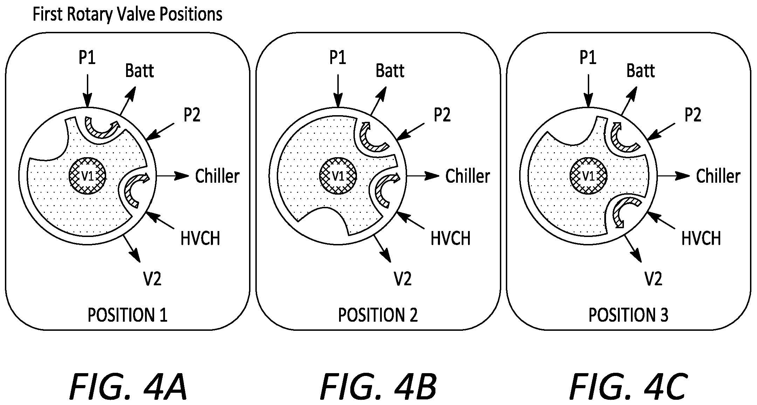

With additional reference to FIGS. 4A-C, in one embodiment, the cam of the first rotary valve 118 can be rotated into at least three operable positions. For example, a first position can provide a first fluid coupling between the first pump 112A and the battery pack 52, and a second fluid coupling between the high-voltage coolant heater 104 and the chiller 106. A second position can provide a first fluid coupling between the second pump 112B and the battery pack 52, and a second fluid coupling between the high-voltage coolant heater 104 and the chiller 106. A third position can provide a first fluid coupling between the second pump 112B and the battery pack 52, and a second fluid coupling between the high-voltage coolant heater 104 and the second rotary valve 120. Other combinations of fluid connections are also contemplated.

The second rotary valve 120 can selectively couple fluid conduits leading to the first pump 112A, the engine propulsion system 54, the second pump 112B, the water-cooled condenser 108, the engine propulsion system 54, and the first rotary valve 118. In some embodiments, a flow of coolant within the integrated thermal management system 100 can flow into the second rotary valve 120 via the first and second pumps 112A/B, the engine propulsion system 54, and the first rotary valve 118 via inlets defined in the housing 150, and outwardly to the engine propulsion system 54, water-cooled condenser 108 via outlets defined by the housing 150.

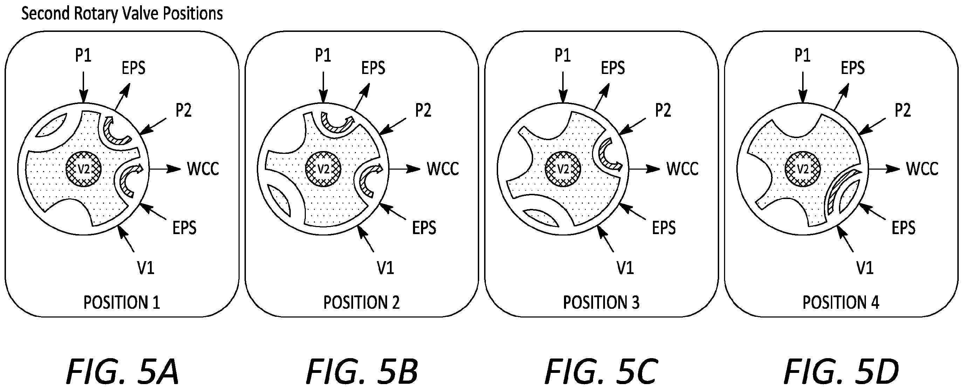

With additional reference to FIGS. 5A-D, in some embodiments, the cam of the second rotary valve 120 can be rotated into at least four operable positions. For example, a first position can provide a first fluid coupling between the second pump 112B and the engine propulsion system 54, and a second fluid coupling between the engine propulsion system 54 and the water-cooled condenser 108. A second position can provide a first fluid coupling between the first pump 112A and the engine propulsion system 54, and a second fluid coupling between the engine propulsion system 54 and the water-cooled condenser 108. A third position can provide a single fluid coupling between the second pump 112B and the water-cooled condenser 108. A fourth position can provide a single fluid coupling between the first rotary valve 118 and the water-cooled condenser 108. Other combinations of fluid connections are also contemplated.

The third rotary valve 122 can selectively couple fluid conduits leading to the second pump 112B, the radiator 128, the first pump 112A, the chiller 106, and the water-cooled condenser 108. In some embodiments, a flow of coolant within the integrated thermal management system 100 can flow into the third rotary valve 122 via the radiator 128, chiller 106, and water-cooled condenser 108 via inlets defined in the housing 152, and outwardly to the first and second pump 112A/B and radiator 128 via outlets defined by the housing 152. In some embodiments, more than one inlet or outlet can be dedicated to a single component. For example, as depicted in FIG. 3C, the third rotary valve 122 can include two outlets configured to enable fluid to flow to the second pump 112B.

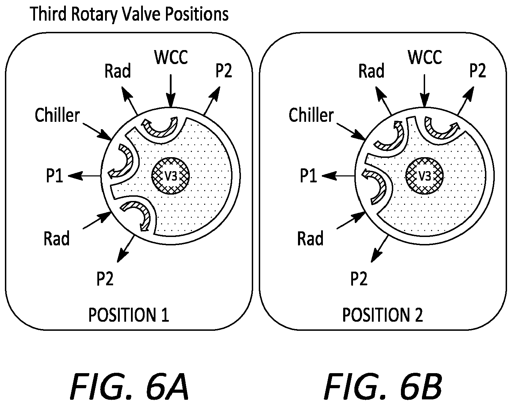

With additional reference to FIGS. 6A-B, in one embodiment, the cam of the second rotary valve 120 can be rotated into at least two operable positions. For example, a first position can provide a first fluid coupling between the water-cooled condenser 108 and the radiator 128, the second fluid coupling between the chiller 106 and the first pump 112A, a third fluid coupling between the radiator 128 and the second pump 112B. The second position can provide a first fluid coupling between the water-cooled condenser 108 and the second pump 112B, the second fluid coupling between the chiller 106 and the radiator 128, and a third fluid coupling between the radiator 128 and the first pump 112A. Other combinations of fluid connections are also contemplated.

Accordingly, manipulation of the each of the three rotary valves 118, 120, 122, and the three binary valves 124, 126, 140 can establish multiple different flow configurations for coolant moving through the integrated thermal management system 100. For example, in some embodiments, manipulation of the valves enables operation of the integrated thermal management system more than thirty different configurations for transferring heat from one area of the vehicle to another.

In a first configuration, heat from the battery pack 52 can be transferred to the cabin area 62. In this configuration, the first rotary valve 118 can be in the first position, the second rotary valve 120 can be in the first position, and the third rotary valve 122 can be in the first position, with a first binary valve 140 in an open position, a second binary valve 124 in a closed position, and a third binary valve 126 in an open position. In this configuration, the first pump 112A, chiller 106, accumulator 116 and compressor 110 can be operational.

In a second configuration, heat from the battery pack 52 can be transferred to the engine propulsion system 54. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in an closed position. In this configuration, the first and second pumps 112A/B can be operational.

In a third configuration, heat from the battery pack 52 can be transferred to both the engine propulsion system 54 and the cabin area 62. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in an open position. In this configuration, the first and second pumps 112A/B, chiller 106, accumulator 116 and compressor 110 can be operational.

In a fourth configuration, the battery pack 52 can be passively cooled. In this configuration, the first rotary valve 118 can be in the first position, the second rotary valve 120 can be in the first position, and the third rotary valve 122 can be in the second position, with a first binary valve 140 in an open position, a second binary valve 124 in a closed position, and a third binary valve 126 in an open position. In this configuration, the first pump 112A, accumulator 116 and radiator 128 can be operational.

In a fifth configuration, the battery pack 52 can be actively cooled. In this configuration, the first rotary valve 118 can be in the first position, the second rotary valve 120 can be in the third position, and the third rotary valve 122 can be in the first position, with a first binary valve 140 in an open position, a second binary valve 124 in an open position, and a third binary valve 126 in a closed position. In this configuration, the first and second pumps 112A/B, chiller 106, accumulator 116 and compressor 110, and water-cooled condenser 108 can be operational.

In a sixth configuration, the cabin area 62 can be cooled, while the battery pack 52 serves as a heat storage device. In this configuration, the first rotary valve 118 can be in the third position, the second rotary valve 120 can be in the fourth position, and the third rotary valve 122 can be in the second position, with a first binary valve 140 in an open position, a second binary valve 124 in an open position, and a third binary valve 126 in a closed position. In this configuration, the second pump 112B, accumulator 116 and compressor 110, and water-cooled condenser 108 can be operational.

In a seventh configuration, the cabin area 62 can be cooled. In this configuration, the first rotary valve 118 can be in the second position, the second rotary valve 120 can be in the second position, and the third rotary valve 122 can be in the first position, with a first binary valve 140 in a closed position, a second binary valve 124 in an open position, and a third binary valve 126 in a closed position. In this configuration, the first and second pumps 112A/B, accumulator 116 and compressor 110, water-cooled condenser 108, and radiator 126 can be operational.

In an eighth configuration, the engine propulsion system 54 can be cooled, while the battery pack 52 serves as a heat storage device. Similarly, in ninth configuration, the battery 52 can be heated with energy transferred from the engine propulsion system 54. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in a closed position. In this configuration, the first and second pumps 112A/B can be operational.

In a tenth configuration, heat from the engine propulsion system 54 can be transferred to the cabin area 62. In this configuration, the first rotary valve 118 can be in the second position, the second rotary valve 120 can be in the second position, and the third rotary valve 122 can be in the first position, with a first binary valve 140 in a closed position, a second binary valve 124 in a closed position, and a third binary valve 126 in an open position. In this configuration, the first and second pumps 112A/B, chiller 106, accumulator 116 and compressor 110 can be operational.

In an eleventh configuration, heat from the engine propulsion system 54 can be transferred to both the cabin area 62 and the battery pack 52. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in an open position. In this configuration, the first and second pumps 112A/B, chiller 106, accumulator 116, and compressor 110 can be operational.

In a twelfth configuration, the engine propulsion system 54 can be cooled. In this configuration, the first rotary valve 118 can be in the second position, the second rotary valve 120 can be in the second position, and the third rotary valve 122 can be in the first position, with a first binary valve 140 in a closed position, a second binary valve 124 in a closed position, and a third binary valve 126 in a closed position. In this configuration, the first and second pumps 112A/B and radiator 126 can be operational.

In a thirteenth configuration, the battery pack 52 and the cabin area 62 can be cooled. In this configuration, the first rotary valve 118 can be in the first position, the second rotary valve 120 can be in the third position, and the third rotary valve 122 can be in the first position, with a first binary valve 140 in an open position, a second binary valve 124 in an open position, and a third binary valve 126 in a closed position. In this configuration, the first and second pumps 112A/B, chiller 106, accumulator 116, compressor 110, water-cooled condenser 108, and radiator 126 can be operational.

In a fourteenth configuration, heat energy from both the battery pack 52 and the engine propulsion system 54 can be transferred to the cabin area 62. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in an open position. In this configuration, the first and second pumps 112A/B, chiller 106, accumulator 116, and compressor 110 can be operational.

In a fifteenth configuration, both the battery pack 52 and the engine propulsion system 54 can be cooled. In this configuration, the first rotary valve 118 can be in the first position, the second rotary valve 120 can be in the first position, and the third rotary valve 122 can be in the first position, with a first binary valve 140 in an open position, a second binary valve 124 in an open position, and a third binary valve 126 in a closed position. In this configuration, the first and second pumps 112A/B, chiller 106, accumulator 116, compressor 110, water-cooled condenser 108, and radiator 126 can be operational.

In a sixteenth configuration, the engine propulsion system 54 and the cabin area 62 can be cooled, while the battery pack 52 serves as a heat storage device. In this configuration, the first rotary valve 118 can be in the second position, the second rotary valve 120 can be in the second position, and the third rotary valve 122 can be in the first position, with a first binary valve 140 in an open position, a second binary valve 124 in an open position, and a third binary valve 126 in a closed position. In this configuration, the first and second pumps 112A/B, accumulator 116, compressor 110, and water-cooled condenser 108 can be operational.

In a seventeenth configuration, the engine propulsion system 54 and the cabin area 62 can be cooled. In this configuration, the first rotary valve 118 can be in the second position, the second rotary valve 120 can be in the second position, and the third rotary valve 122 can be in the first position, with a first binary valve 140 in a closed position, a second binary valve 124 in an open position, and a third binary valve 126 in a closed position. In this configuration, the first and second pumps 112A/B, accumulator 116, compressor 110, water-cooled condenser 108, and radiator 126 can be operational.

In an eighteenth configuration, the battery pack 52, engine propulsion system 54, and the cabin area 62 can be cooled. In this configuration, the first rotary valve 118 can be in the first position, the second rotary valve 120 can be in the first position, and the third rotary valve 122 can be in the first position, with a first binary valve 140 in an open position, a second binary valve 124 in an open position, and a third binary valve 126 in a closed position. In this configuration, the first and second pumps 112A/B, chiller 106, accumulator 116, compressor 110, water-cooled condenser 108, and radiator 126 can be operational.

In a nineteenth configuration, the cabin area 62 can be heated by ambient conditions. In this configuration, the first rotary valve 118 can be in the first position, the second rotary valve 120 can be in the first position, and the third rotary valve 122 can be in the second position, with a first binary valve 140 in a closed position, a second binary valve 124 in a closed position, and a third binary valve 126 in an open position. In this configuration, the first and second pumps 112A/B, chiller 106, accumulator 116, compressor 110, water-cooled condenser 108, and radiator 126 can be operational.

In a twentieth configuration, heat energy from the high-voltage coolant heater 104 can be transferred to the battery pack 52. In this configuration, the first rotary valve 118 can be in the first position, the second rotary valve 120 can be in the first position, and the third rotary valve 122 can be in the first position, with a first binary valve 140 in an open position, a second binary valve 124 in a closed position, and a third binary valve 126 in a closed position. In this configuration, the second pump 112B and high-voltage coolant heater 104 can be operational.

In a twenty-first configuration, heat energy from the high-voltage coolant heater 104 can be transferred to the cabin area 62. In this configuration, the first rotary valve 118 can be in the first position, the second rotary valve 120 can be in the first position, and the third rotary valve 122 can be in the first position, with a first binary valve 140 in a closed position, a second binary valve 124 in a closed position, and a third binary valve 126 in an open position. In this configuration, the second pump 112B, chiller 106, accumulator 116, compressor 110, and high-voltage coolant heater 104 can be operational.

In a twenty-second configuration, heat energy from the high-voltage coolant heater 104 can be transferred to the engine propulsion system 54. In this configuration, the first rotary valve 118 can be in the second position, the second rotary valve 120 can be in the second position, and the third rotary valve 122 can be in the first position, with a first binary valve 140 in a closed position, a second binary valve 124 in a closed position, and a third binary valve 126 in a closed position. In this configuration, the first and second pumps 112AB and high-voltage coolant heater 104 can be operational.

In a twenty-third configuration, heat from the high-voltage coolant heater 104 can be transferred to both the battery pack 52 and the cabin area 62. In this configuration, the first rotary valve 118 can be in the first position, the second rotary valve 120 can be in the first position, and the third rotary valve 122 can be in the first position, with a first binary valve 140 in an open position, a second binary valve 124 in the closed position, and a third binary valve 126 in an open position. In this configuration, the first and second pumps 112A/B, chiller 106, accumulator 116, compressor 110, and high-voltage coolant heater 104 can be operational.

In a twenty-fourth configuration, heat energy from the high-voltage coolant heater 104 can be transferred to both the battery pack 52 and the engine propulsion system 54. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in a closed position. In this configuration, the first and second pumps 112A/B, accumulator 116, and high-voltage coolant heater 104 can be operational.

In a twenty-fifth configuration, heat energy from the high-voltage coolant heater 104 can be transferred to both the cabin area 62 and the engine propulsion system 54. In this configuration, the first rotary valve 118 can be in the second position, the second rotary valve 120 can be in the second position, and the third rotary valve 122 can be in the first position, with a first binary valve 140 in a closed position, a second binary valve 124 in a closed position, and a third binary valve 126 in an open position. In this configuration, the first and second pumps 112A/B, chiller 106, accumulator 116, compressor 110, and high-voltage coolant heater 104 can be operational.

In a twenty-sixth configuration, heat energy from the high-voltage coolant heater 104 can be transferred to the battery pack 52, the engine propulsion system 54 and the cabin area 62. In this configuration, the first rotary valve 118 can be in the second position, the second rotary valve 120 can be in the second position, and the third rotary valve 122 can be in the first position, with a first binary valve 140 in an open position, a second binary valve 124 in a closed position, and a third binary valve 126 in an open position. In this configuration, the first and second pumps 112A/B, chiller 106, accumulator 116, compressor 110, and high-voltage coolant heater 104 can be operational.

In a twenty-seventh configuration, heat energy from the ambient environment can be transferred to the engine propulsion system 54. In this configuration, the first rotary valve 118 can be in the second position, the second rotary valve 120 can be in the second position, and the third rotary valve 122 can be in the second position, with a first binary valve 140 in a closed position, a second binary valve 124 in a closed position, and a third binary valve 126 in an open position. In this configuration, the first and second pumps 112A/B, chiller 106, accumulator 116, compressor 110, radiator 126, and high-voltage coolant heater 104 can be operational.

In a twenty-eighth configuration, heat energy from the engine propulsion system 54 and high-voltage coolant heater 104 can be transferred to the battery pack 52. In this configuration, the first rotary valve 118 can be in the second position, the second rotary valve 120 can be in the second position, and the third rotary valve 122 can be in the second position, with a first binary valve 140 in an open position, a second binary valve 124 in a closed position, and a third binary valve 126 in a closed position. In this configuration, the first and second pumps 112A/B, and high-voltage coolant heater 104 can be operational.

In a twenty-ninth configuration, heat energy from the engine propulsion system 54 and high-voltage coolant heater 104 can be transferred to the cabin area 62. In this configuration, the first rotary valve 118 can be in the second position, the second rotary valve 120 can be in the second position, and the third rotary valve 122 can be in the second position, with a first binary valve 140 in a closed position, a second binary valve 124 in a closed position, and a third binary valve 126 in an open position. In this configuration, the first and second pumps 112A/B, chiller 106, accumulator 116, compressor 110, and high-voltage coolant heater 104 can be operational.

In a thirtieth configuration, heat energy from the engine propulsion system 54 and high-voltage coolant heater 104 can be transferred to both the battery pack 52 and the cabin area 62. In this configuration, the first rotary valve 118 can be in the second position, the second rotary valve 120 can be in the second position, and the third rotary valve 122 can be in the second position, with a first binary valve 140 in an open position, a second binary valve 124 in a closed position, and a third binary valve 126 in an open position. In this configuration, the first and second pumps 112A/B, chiller 106, accumulator 116, compressor 110, and high-voltage coolant heater 104 can be operational.

In a thirty-first configuration, only the 12V converter portion 53 of the battery pack 52 can be actively cooled. In this configuration, the first rotary valve 118 can be in the first position, the second rotary valve 120 can be in the first position, and the third rotary valve 122 can be in the second position, with a first binary valve 140 in a closed position, a second binary valve 124 in a closed position, and a third binary valve 126 in a closed position. In this configuration, the first pumps 112A, and radiator 126 can be operational.

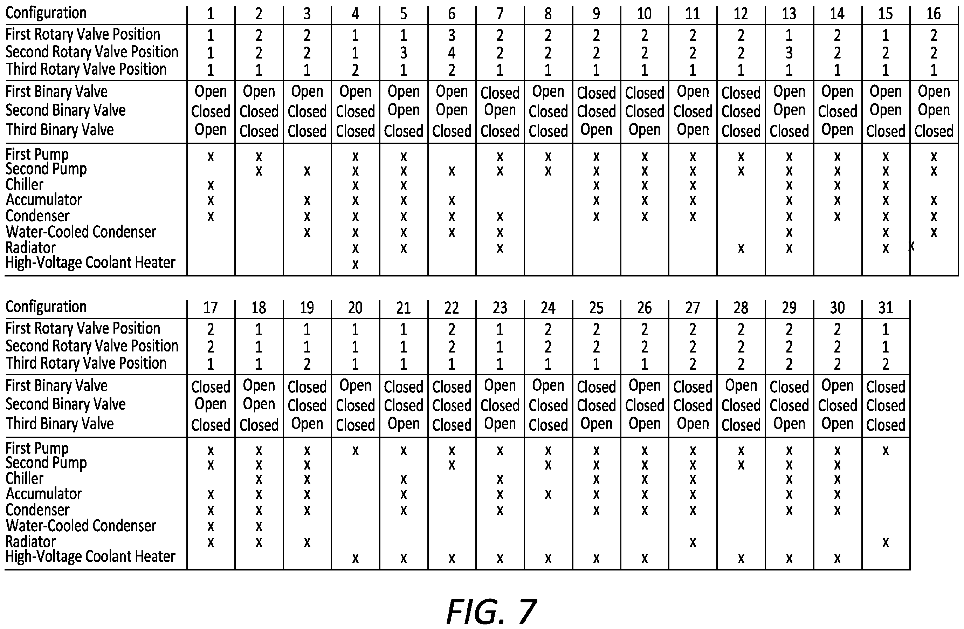

With additional reference to FIG. 7, a tabular format representing the respective valve positions and component activations of corresponding to the above referenced thirty-one different integrated thermal management system 100 configurations is depicted in accordance with an embodiment of the disclosure.

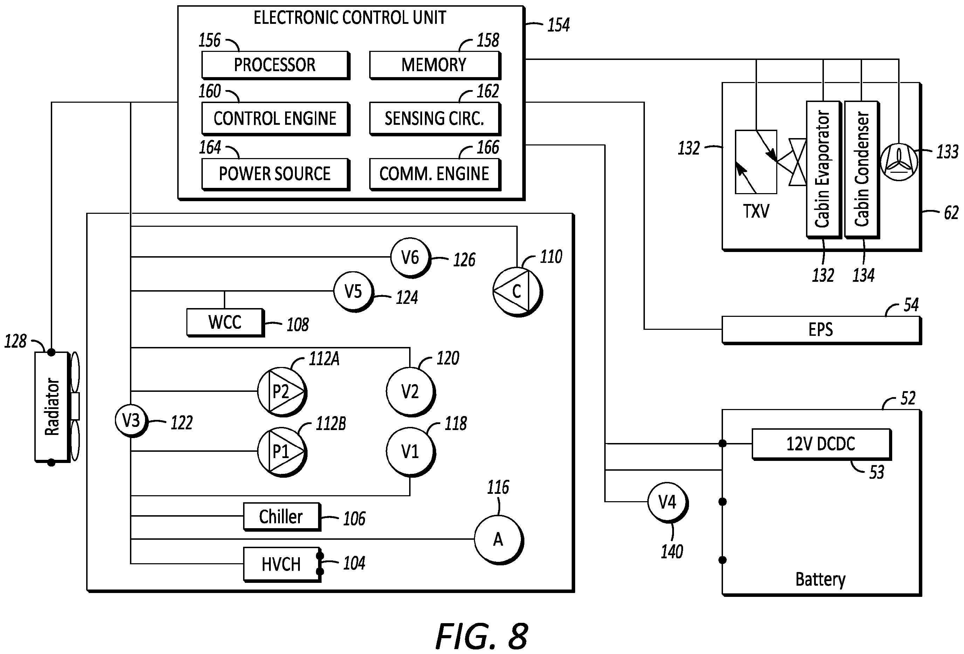

In some embodiments, the integrated thermal management system 100 can be automated, with switching of the valves 118, 120, 122, 124, 126, 140 and powering up the other system components controlled by an electronic control unit. For example, with additional reference to FIG. 8, a system architecture diagram depicting automated control of the integrated thermal management system 100 is picked in accordance with an embodiment of the disclosure. As depicted, the integrated thermal management system 100 can include an electronic control unit (ECU) 154 in electrical communication with the valves 118, 120, 122, 124, 126, 140 and other components (e.g., high-voltage coolant heater 104, chiller 106, water-cooled condenser 108, compressor 110, pumps 112A/B, accumulator 116, a radiator 128, cabin evaporate or 130, thermal expansion valve 132, cabin fan 133, cabin condenser 134, etc.) to switch set components on/off for automated control of the system 100. Additionally, the ECU 154 can include a plurality of temperature sensors configured to sense a temperature of at least one of the cabin area 62, engine propulsion system 54, battery pack 52, 12-V converter 53, radiator 128, as well as an ambient (e.g., outside air) temperature. The system 100 may further include other sensors (e.g., temperature sensors, pressure sensors, etc.) positioned throughout the system for improved feedback can control of the various components.

The ECU 154 or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device.

An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peerpeer, cloud, etc.) processing where appropriate, or other such techniques.

Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

In some embodiments, ECU 154 can include a processor 156, memory 158, control engine 160, sensing circuitry 162, and power source 164. Optionally, in embodiments, ECU 154 can further include a communications engine 166. Processor 156 can include fixed function circuitry and/or programmable processing circuitry. Processor 156 can include any one or more of a microprocessor, a controller, a DSP, an ASIC, an FPGA, or equivalent discrete or analog logic circuitry. In some examples, processor 156 can include multiple components, such as any combination of one or more microprocessors, one or more controllers, one or more DSPs, one or more ASICs, or one or more FPGAs, as well as other discrete or integrated logic circuitry. The functions attributed to processor 156 herein may be embodied as software, firmware, hardware or any combination thereof.

Memory 158 can include computer-readable instructions that, when executed by processor 156 cause ECU 154 to perform various functions. Memory 158 can include volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media.

Control engine 160 can include instructions to control the components of ECU 154 and instructions to selectively control a flow of electrical power to the valves 118, 120, 122, 124, 126, 140 and other components (e.g., high-voltage coolant heater 104, chiller 106, water-cooled condenser 108, compressor 110, pumps 112A/B, accumulator 116, a radiator 128, cabin evaporate or 130, thermal expansion valve 132, cabin fan 133, cabin condenser 134, etc.). For example, based on conditions detected by the sensing circuitry 162 or the vehicle (e.g. other vehicle ECUs), control engine 160 can selectively manipulate one or more valves 118, 120, 122, 124, 126, 140 while switching on or off various other system components to affect heat transfer between areas of the vehicle.

In embodiments, sensing circuitry 162 can be configured to sense a variety of conditions related within the system 100. For example, sensing circuitry 162 can be configured to sense a temperature within the cabin area 62, engine propulsion system 54, battery pack 52, 12-V converter 53, radiator 128, as well as an ambient (e.g., outside air) temperature. Additionally, sensing circuitry 162 can be configured to sense at least one of a temperature and pressure, or other condition (e.g., phase change) directly or indirectly associated components of the system 100. Accordingly, sensing circuitry 162 can include or can be operable with one or more sensors (e.g., one or more thermocouples, pressure sensors, etc.) positioned throughout the system 100.

If it is determined by the processor 156 that a temperature of at least one of the cabin area 62, engine propulsion system 54, battery pack 52, or 12-V converter 53 is outside of the desired temperature range, the control engine 160 can manipulate valves 118, 120, 122, 124, 126, 140 as well as control power to the high-voltage coolant heater 104, chiller 106, water-cooled condenser 108, compressor 110, pumps 112A/B, accumulator 116, a radiator 128, cabin evaporate or 130, thermal expansion valve 132, cabin fan 133, cabin condenser 134, etc. to affect heating or cooling of the cabin area 62, engine propulsion system 54, battery pack 52, or 12-V converter 53.

Power source 164 is configured to deliver operating power to the components of ECU 154. Power source 164 can include a battery and a power generation circuit to produce the operating power In some examples, the power source 164 is rechargeable to allow extended operation. Power source 164 can include any one or more of a plurality of different battery types, such as nickel cadmium batteries, lithium ion batteries and the like.

Optionally, communications engine 166 can include any suitable hardware, firmware, software, or any combination thereof for communicating with other components of the vehicle and/or external devices (e.g., charging station, etc.). Under the control of processor 156, communication engine 166 can receive downlink telemetry from, as well as send uplink telemetry to one or more external devices using an internal or external antenna. In addition, communication engine 166 can facilitate communication with a networked computing device and/or a computer network. For example, in some embodiments, the communications engine 166 can be configured to receive information to anticipate ambient temperatures and power requirements of the engine propulsion system 54 and battery pack 52 along the desired route, to estimate heating and/or cooling needs. Thereafter, the system 100 may precondition certain components of the vehicle for improved efficiency during the route.

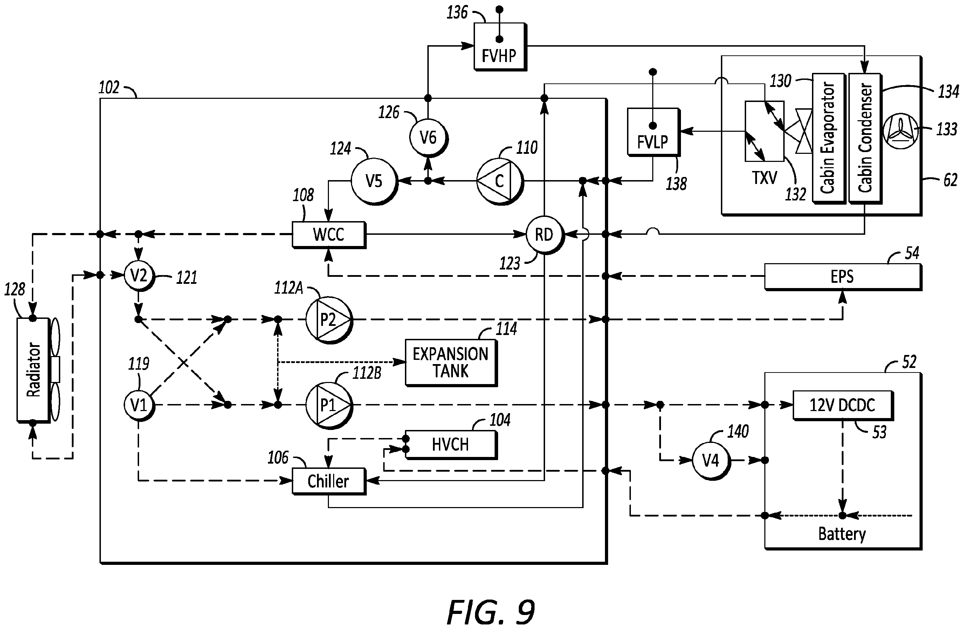

Although the integrated thermal management system 100 is depicted as including a total of six valves, three valves of which are rotary valves having a shaped cam configured to selectively fluidly couple various components within the manifold, other potentially simpler embodiments including a fewer number of valves, are contemplated. For example, with reference to FIG. 9, in one embodiment, the three rotary valves 118, 120, 122 (as depicted in FIG. 2) can be replaced with a pair of two-way valve 119, 121. Various embodiments of the present invention will be described in detail with reference to the drawings, wherein like reference numerals represent like parts and assemblies throughout the several views.

Accordingly, manipulation of the two-way valve 119, 121, the three binary valves 140, 124 and 126, and junction 123 can enable the selection of a plurality of different system configurations to enable a transfer of heat between the cabin area 62, engine propulsion system 54, battery pack 52, and the outside environment. Other embodiments are also contemplated.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

## Claims

1. An integrated vehicle thermal management system, comprising:
a manifold assembly integrating a plurality of valves in fluid communication with conduit coupling at least one of a first pump, a second pump, a high-voltage coolant heater, a chiller, a water-cooled condenser, a compressor, and an accumulator into a discrete, preassembled unit positionable within a vehicle during assembly,
wherein the manifold assembly is fluidly coupleable to conduit in fluid communication with at least one of a radiator, cabin HVAC components, engine propulsion system heat exchanger, or battery pack heat exchanger positioned external to the manifold assembly.

2. The integrated thermal management system of claim 1, further comprising at least one rotary valve configured to selectively fluidly couple at least one of the first pump or a second pump to at least one of the high-voltage coolant heater, the chiller, the water-cooled condenser, the compressor, or the accumulator.

3. The integrated thermal management system of any one of the preceding claims, wherein the at least one rotary valve comprises a shaped cam rotatable within a housing defining a plurality of inlet ports and a plurality of outlet ports, wherein the shaped cam is configured to fluidly couple at least one inlet port to at least one outlet port.

4. The integrated thermal management system according to any one of the claims 2 to 3, wherein the housing of the at least one rotary valve defines at least three inlet ports and at least two outlet ports.

5. The integrated thermal management system according to any one of the claims 2 to 4, wherein the at least one rotary valve is rotatable between a first position fluidly coupling a first inlet port to a first outlet port, and a second position fluidly coupling a second inlet port to a second outlet port.

6. The integrated thermal management system according to any one of the preceding claims, wherein the manifold assembly includes three rotary valves configured to affect over thirty different system configurations of transferring heat between a cabin area, an engine propulsion system, a battery pack and an ambient environment.

7. The integrated thermal management system according to claim 6, wherein the three rotary valves comprise a first rotary valve configurable in three positions, a second rotary valve configurable and four positions, and a third rotary valve configurable in two positions.

8. An integrated vehicle thermal management system, comprising:
a manifold unit positionable within a vehicle during assembly, the manifold unit including at least one rotary valve configured to selectively fluidly couple at least one of a first pump or a second pump to at least one of a high-voltage coolant heater, a chiller, a water-cooled condenser, a compressor, or an accumulator positioned within the manifold unit.

9. The integrated thermal management system according to claim 8, wherein the at least one rotary valve comprises a shaped cam rotatable within a housing defining a plurality of inlet ports and a plurality of outlet ports, wherein the shaped cam is configured to fluidly couple at least one inlet port to at least one outlet port.

10. The integrated thermal management system according to claim any one of the claims 8 and 9, wherein the at least one rotary valve is rotatable between a first position fluidly coupling a first inlet port to a first outlet port, and a second position fluidly coupling a second inlet port to a second outlet port.

11. The integrated thermal management system according to any one of the claim 8-10, wherein the manifold assembly includes three rotary valves configured to affect over thirty different system configurations of transferring heat between a cabin area, an engine propulsion system, a battery pack and an ambient environment.

12. An integrated vehicle thermal management system, comprising:
three rotary valves configured to selectively fluidly couple at least one of a first pump or a second pump to at least one of a high-voltage coolant heater, a chiller, a water-cooled condenser, a compressor, and an accumulator to affect over thirty different system configurations of transferring heat between a cabin area, engine propulsion system, battery pack and an ambient environment.

13. The integrated thermal management system according to claim 12, wherein each of the three one rotary valves comprises a shaped cam is rotatable within a housing defining a plurality of inlet ports and a plurality of outlet ports, wherein the shaped cam is configured fluidly couple at least one inlet port to at least one outlet port.

14. The integrated thermal management system according to any one of the claims 12 to 13, wherein at least one rotary valve of the three rotary valve is rotatable between a first position fluidly coupling a first inlet port to a first outlet port, and a second position fluidly coupling a second inlet port to a second outlet port.

15. The integrated thermal management system of any one of the preceding claims, further comprising three binary valves.
